# EUROPÄISCHE PATENTSCHRIFT

(11) **EP 0 529 024 B1**
(45) Veröffentlichungstag und Bekanntmachung des Hinweises auf die Patenterteilung: **29.05.1996**
(21) Anmeldenummer: 92905322.1
(22) Anmeldetag: 04.03.1992
(51) Int. Cl.: A01C 1/04

(54) **SAMENTRÄGER FÜR DIE BEGRÜNUNG UND ARMIERUNG VON GENEIGTEN FLÄCHEN**
SEED RETAINING NET FOR GRASSING AND STABILISING SLOPING SURFACES
FILET DE SUPPORT DE SEMENCE POUR L'ENGAZONNEMENT ET L'ARMATURE DE SURFACES INCLINEES

(30) Priorität: 12.03.1991 CH 728/91
(43) Veröffentlichungstag der Anmeldung: 03.03.1993
(73) Patentinhaber: Ullmann, Martin, CH-9030 Abtwil (CH)
(72) Erfinder: Ullmann, Martin, CH-9030 Abtwil (CH)
(74) Vertreter: Gachnang, Hans Rudolf
(86) Internationale Anmeldenummer: CH9200043
(87) Internationale Veröffentlichungsnummer: WO9216098

(56) Entgegenhaltungen:
- EP-A- 0 434 900
- FR-A- 1 087 425
- FR-A- 2 566 990
- GB-A- 2 101 862
- US-A- 2 338 103

## Beschreibung

Gegenstand der vorliegenden Erfindung ist ein Samenträger für die Begrünung von geneigten Flächen.

Es sind bereits Samenträger bekannt, bei denen die Samen in ein Vlies oder vliesähnliches ebenes Gebilde eingearbeitet oder auf diesem festgeklebt sind. Solche Samenträger haben den Nachteil, dass sie entweder mit einer Humusschicht bedeckt werden müssen, um in flächenförmigen Kontakt mit dem Untergrund zu gelangen, damit einerseits die Samenwurzeln in den Untergrund schlagen können und andererseits einer zu raschen Austrocknung und damit einer Zerstörung der keimenden Samen entgegengewirkt werden kann. Es besteht auch die Möglichkeit, solche samentragende Vliese mittels Nägeln oder dgl. zusätzlich am Boden zu befestigen. Werden solche vliesförmige Samenträger auf geneigte Flächen ausgelegt, so besteht die Gefahr, dass bei starken Regenfällen die darüber ausgebreitete Humusschicht abrutscht oder weggeschwemmt wird.

Aus der deutschen Patentschrift 826516 und der FR-Patentschrift 1.087.425 ist es bekannt, Samen in regelmässigen Abständen auf einer Schnur anzubringen und die Schnur mittels einer entsprechenden Vorrichtung in das Erdreich einzulegen. Auf diese Weise lassen sich beispielsweise Maiskörner oder dergleichen in genau vorgegebenem Abstand von einem Fahrzeug aus automatisch im Boden einlegen.

Auf einer Schnur aufgereihte Samenkörner eignen sich nur zur Pflanzung von grosswüchsigen Pflanzen, welche zudem in gegenseitigem Abstand zueinander angeordnet sein müssen. Im weiteren dient die Schnur einzig dazu, die Samen in den Boden einzubringen; sie ist so ausgebildet, dass sie möglichst rasch verrottet. Für eine grossflächige Begrünung, insbesondere geneigter Flächen, eignen sich solche Schnüre nicht.

Aus der FR-A1-2 566 990 ist weiter bekannt, Samen zwischen zwei bandförmigen Streifen in regelmässigen Abständen anzuordnen, um auf diese Weise einen gleichbleibenden Pflanzenabstand zu erhalten. Weiter dienen die beiden folienartigen, bandförmigen Träger dazu, das Saatgut einfach rollenförmig aufwickeln zu können und während der Lagerung gegen den Befall von Schädlingen zu schützen. Aus der französischen Patentanmeldung ist es auch bekannt, die Samen in Gestalt eines Gitters anzuordnen, das beidseitig durch eine Schutzfolie abgedeckt ist, die einerseits das einfache Aufrollen des Gitters ermöglicht und andererseits die Samen vor Schädlingen schützt.

Durch die beidseitige Überdeckung des Gitters wird dieses in sich sehr steif und kann sich den Unebenheiten der zu bepflanzenden Oberfläche nur mit Mühe anschmiegen. Dadurch ergibt sich ein äusserst schlechter Kontakt zum Untergrund und es müssen sehr viele Befestigungsstellen angebracht werden, um das in sich steife Gitter auf die Bodenoberfläche zu pressen. Bei starken Regenfällen rinnt bei geneigt verlegten Gittern an Hängen das Wasser von der Oberfläche ab und es kann dadurch keine genügend Befeuchtung des Untergrundes, welche Voraussetzung für ein gutes Wachstum ist, erreicht werden.

Beide bekannten Anordnungen lassen sich im Gelände nicht optimal verlegen, und es ist deshalb nicht möglich, das gewünschte Ziel eines sicheren Anwachsens der Keimlinge zu erreichen.

Die Aufgabe der vorliegenden Erfindung besteht darin, einen Samenträger für die Begrünung von Flächen zu schaffen, der sich selbst an die Unebenheiten der zu bepflanzenden Fläche anpasst und mit dieser in innigen Kontakt gelangt und verharrt und zugleich für eine kürzere oder längere Zeit als Armierung der zu begrünenden Oberfläche und gegenseitigen Zusammenhalt der aus dem Samenträger entstehenden Pflanzen dient.

Die netzförmige Verknotung der die Samen tragenden Seile ermöglicht es, die Samen gegen Vogelfrass geschützt und in genau vorgegebener Menge, angepasst an den Einsatzort auszubringen. Zur Ankeimung der Samen können nebst dem eigentlichen Saatgut Humus und Dünger innerhalb der Seile untergebracht werden. Bei sehr eng geflochtenen Seilmänteln wird die einmal aufgenommene Feuchtigkeit sehr lange zurückgehalten, so dass auch ohne kontinuierliche Zufuhr von Wasser eine ausgezeichnete Keimung stattfinden kann. Die durch ihr Eigengewicht auf den Untergrund aufliegenden Seile des Netzes bewirken, dass die aus dem Seil ausspriessenden Wurzeln sofort Kontakt und Halt finden im darunterliegenden Boden. Starke Regenfälle können weder das Saatgut, noch die keimenden Jungpflanzen, noch das Netz vom Untergrund wegschwemmen. Bei Netzen aus Baumwolle verrotten die Seile nach Monaten oder Jahren und lassen keine Rückstände in der begrünten Fläche zurück. Bei sehr exponierten, ungeschützten und steilen Böschungen können Seile aus unverrottbaren Kunstfasern verwendet werden, welche auch nach dem Verwachsen der Pflanzen mit dem Untergrund eine zusätzliche Armierung der gesamten Oberfläche ermöglichen. Es können Netze aus feinen oder aus dicken Seilen hergestellt werden, wodurch Begrünungen sowohl mit Gräsern als auch mit Gehölzen durch entsprechendes Einbringen von solchen Samen möglich werden. Für die Wiederbegrünung von Skipisten und Sportplätzen können feine Netze eingesetzt werden, die auf der Grasnarbe durch die neuen Gräser verankert werden und einer Erosion durch Umwelteinflüsse besser widerstehen als lose Einzelpflanzen.

Anhand eines illustrierten Ausführungsbeispieles wird die Erfindung näher erläutert. Es zeigen:
- Fig. 1: schematisch ein Netz aus kreuzweise miteinander verbundenen Seilen,
- Fig. 2: eine Ansicht eines geflochtenen Seilmantels,
- Fig. 3: einen Querschnitt durch das Seil längs Linie III-III in Figur 2 und
- Fig. 4: einen Querschnitt durch das Seil längs Linie III-III in Figur 2 mit einer eingelegten Schnur als Seele

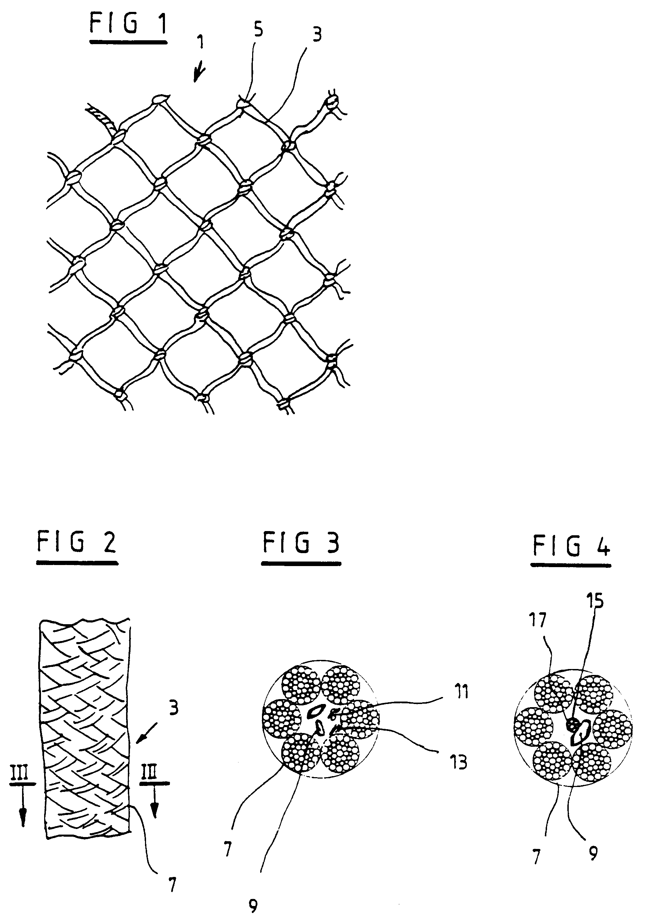

In Figur 1 ist ein diagonal geflochtenes Netz 1 aus einem aus Kunststoff- und/oder Naturfasern bestehenden Seiles 3 dargestellt. Die diagonal verlaufenden Seile 3 sind durch Knoten 5 miteinander verbunden. Die Herstellung solcher diagonal oder parallel geflochtener Netze 1 kann auf herkömmlichen Maschinen, wie sie für die Fertigung von Fischernetzen und dgl. eingesetzt werden, erfolgen. Im Netz 1 gemäss der Erfindung sind Seile 3 verarbeitet, die einen geflochtenen Mantel (Figur 1) oder einen gedrehten Mantel (keine Abbildung) aufweisen. Anstelle einer Seele, welche die Zugskräfte aufzunehmen vermag oder zusätzlich zu einer Seele sind im Innern des schlauchförmigen Mantels 7 Samen 9 während der Herstellung der Seile 3 eingebracht. Nebst den Samen 9 können zusätzlich Düngstoffe 11 und/oder Humus oder dgl. 13 ins Innere des Mantels 7 eingefüllt sein. Es können Seile 3 aller Art, z.B. geflochtene, gewirkte, gewobene oder gedrehte eingesetzt werden.
In der Figur 3 sind die Samen 9 ungeordnet, lose in das Seil 3 eingefüllt. Um eine genau bestimmte Menge von Samen oder Keimlingen 9 pro Längeneinheit des Seiles 3 in dieses einzubringen, ist in der Ausgestaltung der Erfindung nach Figur 4 in den Mantel 7 eine Schnur 15 als Seele eingelegt, auf welcher ein Klebstoff 17 aufgebracht worden ist. Die mit Klebstoff 17, z.B. Melasse, beschichtete Schnur 15 trägt auf ihrer Oberfläche Samen 9, welche beim kontinuierlichen Hindurchführen durch einen Behälter mit Samen an der klebenden Oberfläche hängengeblieben sind. Die Schnur 15 kann wie eine Seele auf der Flechtmaschine für den Mantel 7 in diesen eingebracht werden.

Die in den Mantel 7 eingeschlossenen Samen 9 können im wesentlichen beliebig lange gelagert werden; sie beginnen ihre Keimung erst mit der Zufuhr von Feuchtigkeit, Licht und Wärme.
Ein mit Samen 9 oder Keimlingen angereichertes Netz 1 wird auf der zu begrünenden Fläche ausgebreitet und, falls dies notwendig ist, an wenigen Stellen befestigt. Vorzugsweise wird das Netz 1 ein wenig in die Oberfläche eingedrückt oder eingewalzt, damit nicht nur eine linienförmige Berührung mit dem Untergrund erfolgt, sondern die Seile mindestens zur Hälfte vom Erdreich umschlossen sind. Selbstverständlich kann das Netz 1 auch vollständig mit Humus überdeckt werden. Durch die natürliche Feuchtigkeit oder durch künstliches Begiessen beginnen die Samen innerhalb weniger Tage vorerst im Innern der Seile zu keimen, wobei die allfällig eingebrachten Düngstoffe 11 die Keimung beschleunigen können. Die sich bildenden Wurzeln durchdringen den Mantel 7 der Seile 3 und suchen ihren Weg in den darunterliegenden gewachsenen Boden. Die feinen Wurzeln können, da sie stets vom Mantel 7 der Seile gehalten sind, weder vom Winde verweht, noch bei starken Regenfällen weggeschwemmt werden. Sind die Seile 3 aus Naturfasern hergestellt, so werden sie innerhalb einiger Monate verrotten oder verarmieren die zu begrünende Fläche nur während einer kurzen Zeit. Bei exponierten Anlagen, z.B. bei Verwendung der Netze 1 in lawinengefährdeten Hängen, ist eine lange dauernde Armierung erwünscht. In diesen Fällen treten anstelle von Gräsersamen auch solche von Büschen oder von Bäumen.

Damit ein sehr rasches Anwachsen oder Verwurzeln der aus dem Netz 1 keimenden Pflanzen an exponierten Stellen gewährleistet ist, kann einige Tage vor dem Verlegen durch Zugabe von Wasser und allenfalls Erwärmung der Netze 1 eine Vorkeimung der Samen und eine Wurzelbildung durch die Mäntel der Seile hindurch erfolgen derart, dass die Netze nach dem Verlegen innert kürzester Frist mit dem Untergrund verwachsen.

## Patentansprüche

1. Samenträger für die Begrünung und Armierung von ebenen oder geneigt liegenden Gelähdeflächen bei dem die Samen von einem Seil oder einer Schnur getragen werden, dadurch gekennzeichnet, dass die Samen (9) im Innern von rohrförmig hergestellten Seilen (3) angeordnet und während der Seilherstellung in diese eingebracht worden sind und dass die Samen (9) tragenden Seile (3) durch Verknüpfen zu einem Netz (1) verbunden sind, das sich an die Unebenheiten der zu bepflanzenden Fläche anpasst.

2. Samenträger nach Anspruch 1, dadurch gekennzeichnet, dass die Seile (3) einen geflochtenen, gewirkten, gewobenen, gedrehten oder geschlagenen Mantel (7) aufweisen und im Innern des Mantels (7) die Samen (9) auf einer Schnur (15) gebunden angeordnet sind.

3. Samenträger nach Anspruch 2, dadurch gekennzeichnet, dass die Samen (9) an einer Schnur (15) durch einen Klebstoff (17) gebunden sind und die Schnur (15) beim Flechten, Drehen oder Schlagen des Mantels (7) als Seele in das Seil (3) eingearbeitet ist.

4. Samenträger nach Anspruch 3, dadurch gekennzeichnet, dass als Klebstoff (17) Melasse oder ein anderer düngend wirkender Stoff verwendet wird.

5. Samenträger nach Anspruch 1, dadurch gekennzeichnet, dass die Samen (9) mit Humus und/oder Düngstoffen vermengt im Mantel (7) des Seiles (3) angeordnet sind.

6. Samenträger nach einem der Ansprüche 1 bis 5, dadurch gekennzeichnet, dass das Seil (3) aus natürlichen, verrottbaren Fasern oder aus künstlichen Fasern oder Filamenten oder einer Mischung aus natürlichen oder künstlichen Fasern hergestellt ist.

## Claims

1. A seed retaining net for grassing and stabilizing plane or sloping surfaces in which the seeds are carried by a rope or a cord, characterized in that the seeds (9) are arranged in the interior of ropes (3) manufactured in a tube-like manner and have been introduced therein during the production of the ropes and that the ropes (3) carrying the seeds are linked by way of binding into a net (1) which adjusts to the unevenness of the surface to be planted.

2. A seed retaining net as claimed in claim 1, characterized in that the ropes (3) are provided with a plaited, weaved, twisted or laid jacket (7) and that the seeds (9) are arranged in the interior of the jacket (7) bound on a cord (15).

3. A seed retaining net as claimed in claim 2, characterized in that the seeds (9) are bound to a cord (15) by an adhesive (17) and the cord (15) is worked into the rope (3) as core during the plaiting, twisting or laying of the jacket (7).

4. A seed retaining net as claimed in claim 3, characterized in that molasses or any other material acting as fertilizer is used as adhesive (17).

5. A seed retaining net as claimed in claim 1, characterized in that the seeds (9) are arranged with humus and/or fertilizing materials in a mixture in the jacket (7) of the rope (3).

6. A seed retaining net as claimed in one of the claims 1 to 5, characterized in that the rope (3) is made from natural rottable fibres or from artificial fibres or filaments or from a mixture of natural and artificial fibres.

## Revendications

1. Filet de support de semences pour l'engazonnement et l'armature de surfaces planes ou inclinées, dans lequel les semences sont portées par une corde ou une ficelle, caractérisé en ce que les semences (9) sont placées à l'intérieur de cordes (3) fabriquées en forme de tube et qu'elles y ont été introduites lors de la fabrication des cordes et en ce que les cordes (3) portant les semences (9) sont reliées au moyen de noeuds à un filet (1), lequel s'adapte aux irrégularités de la surface à planter.

2. Filet de support de semences selon la revendication 1 caractérisé en ce que les cordes (3) présentent une enveloppe (7) tressée, tricotée, tissée, tordue ou commise et que les semences (9) sont disposées à l'intérieur de l'enveloppe (7) et attachées à une ficelle (15).

3. Filet de support de semences selon la revendication 2 caractérisé en ce que les semences (9) sont attachées à une ficelle (15) au moyen d'une substance adhésive (17) et que la ficelle (15) est intégrée comme âme dans la corde (3) lors du tressage, de la torsion ou du commettage de l'enveloppe (7).

4. Filet de support de semences selon la revendication 3 caractérisé en ce qu'on utilise de la mélasse ou une autre substance ayant l'effet d'un engrais comme substance adhésive (17).

5. Filet de support de semences selon la revendication 1 caractérisé en ce que les semences (9) disposées dans l'enveloppe (7) de la corde (3) sont mélangées avec de l'humus et/ou des engrais.

6. Filet de support de semences selon l'une des revendications 1 à 5 caractérisé en ce que la corde (3) est fabriquée avec des fibres naturelles et dégradables ou avec des fibres ou filaments synthétiques ou avec un mélange de fibres naturelles ou synthétiques.
